# EUROPEAN PATENT APPLICATION

(11) **EP 4 773 635 A1**
(43) Date of publication of application: **08.07.2026**
(21) Application number: 24876265.0
(22) Date of filing: 19.08.2024
(51) Int. Cl.: H04W 4/40

(54) **MESSAGE TRANSMISSION METHOD AND APPARATUS, DEVICE, STORAGE MEDIUM, AND PROGRAM PRODUCT**

(30) Priority: 12.10.2023 CN 202311326588
(71) Applicant: Tencent Technology (Shenzhen) Company Limited, Shenzhen, Guangdong 518057 (CN)
(72) Inventor: YANG, Yong, Shenzhen, Guangdong 518057 (CN)
(74) Representative: Reddie & Grose LLP
(86) International application number: PCT/CN2024/113077
(87) International publication number: WO 2025/077445

(57) **Abstract**

Disclosed in embodiments of the present application are a message transmission method and apparatus, a device, and a storage medium, relating to the technical field of Internet of Vehicles. The method comprises: an edge computing device receives a vehicle communication message sent by a core network user plane device, wherein the vehicle communication message is sent by a vehicle-mounted terminal to a core network by means of a communication network, and each formation vehicle in a vehicle formation is provided with a vehicle-mounted terminal; performing message scheduling on each received vehicle communication message; and sending the scheduled vehicle communication message to the core network user plane device, such that the core network user plane device forwards the vehicle communication message to vehicle-mounted terminals other than the vehicle-mounted terminal of the sender by means of the communication network, and the vehicle-mounted terminal of the sender is a vehicle-mounted terminal that sends the vehicle communication message. By adopting the solution provided in the embodiments of the present application, the implementation costs of vehicle formation traveling can be reduced, and the safety of vehicle formation traveling can be improved.

## Description

This application claims priority to Chinese Patent Application No. 2023113265885, filed with the China National Intellectual Property Administration on October 12, 2023, and entitled "METHOD AND APPARATUS FOR TRANSMITTING MESSAGES, DEVICE, AND STORAGE MEDIUM", which is incorporated by reference in its entirety.

### FIELD OF THE TECHNOLOGY

Embodiments of the present disclosure relate to the technical field of internet of vehicles, and in particular, to message transmission.

### BACKGROUND OF THE DISCLOSURE

Vehicles in a platoon can implement efficient cooperation via the internet of vehicles.

In related art, information exchange between the platooning vehicles is implemented as follows. A vehicle to X (V2X) device needs to be mounted on each platooning vehicle. The platooning vehicle uses its V2X device to receive vehicle messages broadcast by another platooning vehicle and broadcast its vehicle message to other platooning vehicles.

A main frequency band used by the V2X device overlaps a spectrum used by other wireless communication systems, and hence direct communication between the V2X devices suffers from severe interferences. Driving safety of the platooning vehicles is affected.

### SUMMARY

Embodiments of the present disclosure provide a method and an apparatus for transmitting message(s), a device, a storage medium, and a program product. The technical solutions are as follows.

In one aspect, a method for transmitting messages is provided according to an embodiment of the present disclosure. The method is executable by an edge computing device and comprises: receiving vehicle messages from a user plane function in a core network, where the vehicle messages are transmitted from a group of in-vehicle telematics terminals via a communication network to the user plane function, and each in-vehicle telematics terminal in the group is mounted on a respective vehicle in a platoon; scheduling the received vehicle messages; and transmitting the scheduled vehicle messages to the user plane function for being forwarded via the communication network to the group of in-vehicle telematics terminals; where for each vehicle message, a source terminal is one of the in-vehicle telematics terminals which transmits said vehicle message to the user plane function, a destination terminal is another one of the in-vehicle telematics terminals which receives said vehicle message from the user plane function.

In another aspect, a method for transmitting a message is provided according to an embodiment of the present disclosure. The method is executable by an in-vehicle telematics terminal mounted on a vehicle in a platoon and comprises: generating a vehicle message; and transmitting the vehicle message to a user plane function in a core network via a communication network for being further transmitted to an edge computing device to an edge computing device, where the edge computing device is configured to schedule a plurality of vehicle messages comprising the vehicle message and forward the scheduled vehicle message to another in-vehicle telematics terminal via the user plane function, and the another in-vehicle telematics terminal is mounted on another vehicle in the platoon.

In another aspect, a method for transmitting messages is provided according to an embodiment of the present disclosure. The method is executable by a user plane function and comprises: receiving, via a communication network, vehicle messages from a group of in-vehicle telematics terminals, where each in-vehicle telematics terminal in the group is mounted on a respective vehicle in a first platoon; forwarding the vehicle messages to an edge computing device for being scheduled, or scheduling the received vehicle messages; receiving the scheduled vehicle message from the edge computing device; and forwarding, via the communication network, the scheduled vehicle messages to the group of in-vehicle telematics terminals; where for each vehicle message, a source terminal is one of the in-vehicle telematics terminals which transmits said vehicle message to the user plane function, a destination terminal is another one of the in-vehicle telematics terminals which receives said vehicle message from the user plane function.

In another aspect, an apparatus for transmitting messages is provided according to an embodiment of the present disclosure. The apparatus comprises: a receiving module, configured for receiving vehicle messages from a user plane function in a core network, where the vehicle messages are transmitted from a group of in-vehicle telematics terminals via a communication network to the user plane function, and each in-vehicle telematics terminal in the group is mounted on a respective vehicle in a platoon; a scheduling module, configured for scheduling the received vehicle messages; and a transmitting module, configured for transmitting the scheduled vehicle messages to the user plane function for being forwarded via the communication network to the group of in-vehicle telematics terminals; where for each vehicle message, a source terminal is one of the in-vehicle telematics terminals which transmits said vehicle message to the user plane function, a destination terminal is another one of the in-vehicle telematics terminals which receives said vehicle message from the user plane function.

In another aspect, an apparatus for transmitting a message is provided according to an embodiment of the present disclosure. The apparatus is in an in-vehicle telematics terminal mounted on a vehicle in a platoon and comprises: a generating module, configured for generating a vehicle message; and a transmitting module, configured for transmitting the vehicle message to a user plane function in a core network via a communication network for being further transmitted to an edge computing device to an edge computing device, where the edge computing device is configured to schedule a plurality of vehicle messages comprising the vehicle message and forward the scheduled vehicle message to another in-vehicle telematics terminal via the user plane function, and the another in-vehicle telematics terminal is mounted on another vehicle in the platoon.

In another aspect, an apparatus for transmitting messages is provided according to an embodiment of the present disclosure. The apparatus comprises: a receiving module, configured for receiving, via a communication network, vehicle messages from a group of in-vehicle telematics terminals, where each in-vehicle telematics terminal in the group is mounted on a respective vehicle in a first platoon; and a forwarding module, configured for forwarding the vehicle messages to an edge computing device for being scheduled, or scheduling the received vehicle messages; where the receiving module is further configured for receiving the scheduled vehicle message from the edge computing device; where the forwarding module is further configured for forwarding, via the communication network, the scheduled vehicle messages to the group of in-vehicle telematics terminals; and where for each vehicle message, a source terminal is one of the in-vehicle telematics terminals which transmits said vehicle message to the user plane function, a destination terminal is another one of the in-vehicle telematics terminals which receives said vehicle message from the user plane function.

In another aspect, a computer device is provided according to an embodiment of the present disclosure. The computer device comprises a processor, a memory, and a transceiver, where the memory stores a computer program, and the computer program when loaded and executed by the processor implements any foregoing method.

In another aspect, a storage medium is provided according to an embodiment of the present disclosure. The storage medium stores a computer program, where the computer program is configured for implementing any foregoing method.

In another aspect, a computer program product is provided according to an embodiment of the present disclosure. The computer program product comprises a computer program, where the computer program product when executed on a computer causes the computer to perform any foregoing method.

Herein after the vehicles in the platoon use their in-vehicle telematics terminal to transmit the vehicle messages to the core network via the communication network, the user plane function forwards the vehicle messages to the edge computing device, and the edge computing device schedules the vehicle messages from the vehicles in the platoon and forwards each vehicle message to the in-vehicle telematics terminal(s) mounted on vehicle(s), other than the vehicle transmitting the vehicle message, in the platoon via the user plane function. Thereby, the message broadcasting among the vehicles in the vehicle platoon is implemented. In the message transmission, dedicated V2X devices are not necessary, and only general in-vehicle telematics terminals are required. Hence, driving costs of the platoon are reduced. In addition, the in-vehicle telematics terminals do not use V2X direct communication, which avoids co-channel interference. Stability of the transmission of the vehicle messages is improved, and safety of the driving of the platooning vehicles is further improved.

### BRIEF DESCRIPTION OF THE DRAWINGS

FIG. 1 is a schematic diagram of direct V2V communication between vehicles in related art.
FIG. 2 is a schematic architectural diagram of a system of vehicle platooning driving system according to an embodiment of the present disclosure.
FIG. 3 is a flowchart of a method for transmitting messages according to an embodiment of the present disclosure.
FIG. 4 is a flowchart of a method for transmitting messages according to another embodiment of the present disclosure.
FIG. 5 is a schematic diagram of a process of transmitting a message according to an embodiment of the present disclosure.
FIG. 6 is a flowchart of a process of registration in a platoon according to an embodiment of the present disclosure.
FIG. 7 is a schematic diagram of a process of transmitting a message according to another embodiment of the present disclosure.
FIG. 8 is a structural block diagram of an apparatus for transmitting messages according to an embodiment of the present disclosure.
FIG. 9 is a structural block diagram of an apparatus for transmitting a message according to an embodiment of the present disclosure.
FIG. 10 is a structural block diagram of an apparatus for transmitting messages according to another embodiment of the present disclosure.
FIG. 11 is a schematic structural diagram of a computer device according to an embodiment of the present disclosure.

### DESCRIPTION OF EMBODIMENTS

To make the objectives, the technical solutions, and advantages of the present disclosure clearer, the following further describes implementations of the present disclosure in detail with reference to the accompanying drawings.

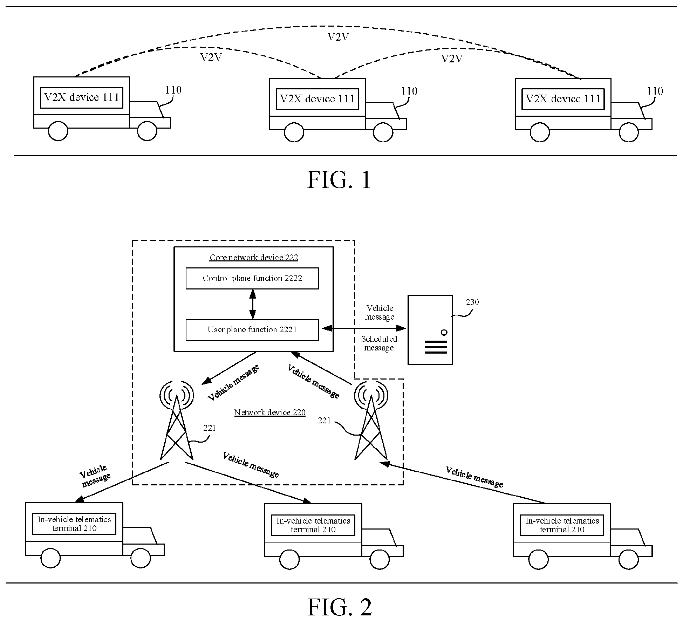

In the related art, when vehicle platooning based driving is implemented, to implement message transmission between vehicles in a platoon, as shown in FIG. 1, each platooning vehicle 110 needs to be provided with a dedicated V2X device 111. When a platooning vehicle needs to transmit a message to another platooning vehicle, the message is broadcast through the V2X device. Another platooning vehicle receives a broadcast through the V2X device, such that implements direct vehicle to vehicle (V2V) communication between the platooning vehicles.

However, because each platooning vehicle needs to be provided with the dedicated V2X device, implementation costs of platooning based driving are high. In addition, there is large co-channel interference (there is an overlap in frequency bands with, e.g., 5G and Wi-Fi) in direct communication between the V2X devices, affecting safety of the platooning-based driving.

To reduce the implementation costs of the platooning-based driving and improve the safety, an embodiment of the present disclosure provides a platooning-based driving system. As shown in FIG. 2, the platooning-based driving system includes in-vehicle telematics terminals 210, a network device 220, and an edge computing device 230.

The in-vehicle telematics terminal 210 is a device mounted on a vehicle in a platoon, and it may be called a telematics terminal, user equipment (UE), or the like. The in-vehicle telematics terminal 210 may be a wireless terminal, a mobile phone, a tablet computer, an augmented reality (AR) terminal, a virtual reality (VR) terminal, a mixed reality (MR) terminal, user premises equipment, or the like in an autonomous driving system. Different from a V2X device, in-vehicle telematics terminals 210 perform indirect communication through a communication network, rather than performing direct V2X communication.

In embodiments of the present disclosure including the embodiments of both the claims and the specification (hereinafter referred to as "all embodiments of the present disclosure"), during autonomous driving of a platooning vehicle, the in-vehicle telematics terminal 210 of the vehicle may be further coupled to an in-vehicle computer on the platooning vehicle. The in-vehicle computer is responsible for environment perception and calculation for autonomous driving, and its controls autonomous driving behavior of the vehicle through a controller area network (CAN) bus of the vehicle. In addition, the in-vehicle computer communicates with the in-vehicle telematics terminal 210 to implement cooperative driving of the vehicles.

The in-vehicle telematics terminal 210 may communicate with the network device 220 via an air interface, for example, a Uu interface.

Herein the network device 220 provides functions of access and management of wireless communication. The network device 220 may include an access network device 221 and a core network device 222. The access network device 221 may have various possible implementation forms, such as a base station, an access node, a wireless network controller, a base station controller, a base transceiver station, or a baseband unit, may be a next generation NodeB (gNB) or a transmission point in a fifth generation (5G) mobile communication system, may be one antenna panel or a group of antenna panels (including a plurality of antenna panels) of a base station in a 5G system, or may be a network node forming a gNB or a transmission point.

Functions of the core network device 222 are mainly to provide establishment and management of a user connection, management for a user, and a bearer for a service, and serve as an interface to an external network. The core network device 222 may process and distribute services in an entire network.

The core network device 222 may include a user plane function (UPF) 2221 and a control plane function (CPF) 2222. The user plane function 2221 is a data plane processing device in a core network and is responsible for uplink and downlink data transmission. The control plane function 2222 implements, for example, session management, mobility management, and policy control.

In all embodiments of the present disclosure, the edge computing device 230 may be deployed at the UPF side. The user plane function 2221 directly forwards a message transmitted by the in-vehicle telematics terminal 210 to the edge computing device 230, such that message transmission delay between the in-vehicle telematics terminals 210 is reduced and driving safety of the platoon is improved.

In all embodiments of the present disclosure, the user plane function 2221 may communicate with the edge computing device 230 through a wired interface, for example, an N6 interface.

In this embodiment of the present disclosure, the edge computing device 230 may run a system for assisting the platooning-based driving. The system is configured to perform scheduling on vehicle messages transmitted within a platoon. Herein the scheduling may refer to determining a sequence of transmitting the vehicle messages from the edge computing device or the UPF to the vehicles. For example, a vehicle message having higher importance (to the driving of the platoon or to the driving of any vehicle in the platoon) is transmitted before the transmission of another vehicle message having lower importance. Herein the importance is also called priority.

Herein the communication system may be implemented as a dedicated network (for example, a 5G dedicated network), or the communication system may be a public network. The 5G dedicated network is an enterprise or industry wireless dedicated network constructed on a basis of the 3GPP 5G standard. The 3GPP standard defines two 5G dedicated network deployment modes: a standalone non-public network (SNPN) and a public network integrated NPN (PNI-NPN). The PNI-NPN, also called "dedicated public network ", means that an enterprise may deploy a 5G dedicated network by sharing a radio access network (RAN), sharing a RAN and a core network control plane, or sharing a 5G public network end-to-end (an end-to-end network slice) with a 5G public network provided by a 5G operator. The SNPN, also called an "independent deployment mode", means that the enterprise independently deploys an entire 5G network from a base station to a core network and to a cloud platform, and the 5G network may be isolated from the 5G public network provided by 5G operators.

The 5G dedicated network is applied to industrial internet scenarios such as an intelligent warehouse and intelligent logistics. In most scenarios, a quantity of user terminals is limited, and a set of 5G core network products with a smallest capacity can satisfy requirements of the application scenarios. In this case, there may be only one user plane function, and the user plane function performs uplink and downlink forwarding of service data of all 5G terminal users.

For example, as shown in FIG. 2, after a platooning vehicle (for example, a lead platooning vehicle) located at a head of the platoon transmits a vehicle message to the network device 220 through the in-vehicle telematics terminal 210, the user plane function 2221 forwards the vehicle message to the edge computing device 230. The edge computing device 230 performs the message scheduling and forwards each scheduled vehicle message to a platooning vehicle other than the lead vehicle in the platoon in the platoon through the communication network. Thereby, transmission of the vehicle messages in the platoon is implemented.

The platooning-based driving system may be used in a scenario of platooning-based driving in a closed area or an open area. For example, the closed area may be a closed factory area or a closed port, and the open area may be an urban road or an expressway. A specific application scenario is not limited herein.

The following embodiments are described by using an example in which a method for transmitting messages is applied to the platooning-based driving system as shown in FIG. 2.

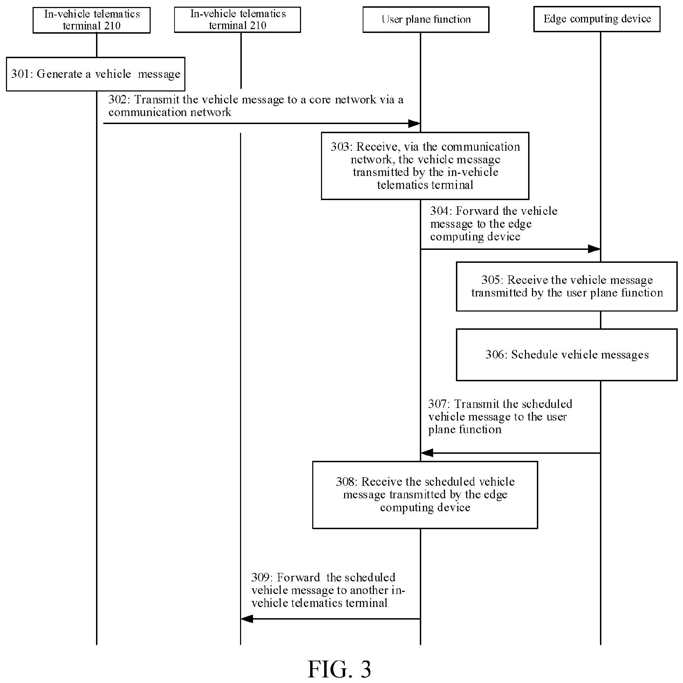

FIG. 3 is a flowchart of a method for transmitting messages according to an embodiment of the present disclosure. This embodiment is described by using an example in which the method is applied to the platooning-based driving system as shown in FIG. 2. The method includes the following operations.

Operation 301: An in-vehicle telematics terminal generates a vehicle message.

In all embodiments of the present disclosure, the vehicle message may be a message periodically transmitted by the in-vehicle telematics terminal or may be a message transmitted by the in-vehicle telematics terminal in response to a certain event. For example, the periodically transmitted vehicle message may comprise information on a status, such as a real-time position, a real-time speed, a throttle position or an accelerator pedal position, and remaining fuel or remaining charge, of the platooning vehicle carrying the in-vehicle telematics terminal. The event may include an emergency event, for example, the event of an emergency stop or emergency obstacle avoidance. An occasion of generating the vehicle messages and specific information content included in the vehicle message are not limited herein.

Each vehicle in the platoon carries its respective-vehicle telematics terminal, and each in-vehicle telematics terminal is capable to transmit a vehicle message of which destination is other in-vehicle telematics terminal(s) in the platoon.

Operation 302: The in-vehicle telematics terminal transmits the vehicle message to a core network via a communication network.

Herein the in-vehicle telematics terminal is different from the V2X device performing direct V2X communication and may be a common communication device (for example, a 5G terminal). Therefore, the communication network is required when the in-vehicle telematics terminal transmitting the vehicle message to another in-vehicle telematics terminal. The communication network may be a cellular communication network, for example, a 4G network or a 5G network. The core network may be a part of the communication network.

In all embodiments of the present disclosure, the vehicle terminal may transmit the vehicle message to an access network device via an air interface, and the access network device is capable to forward the vehicle message to the core network.

Operation 303: A user plane function receives, via the communication network, the vehicle message transmitted by the in-vehicle telematics terminal.

The vehicle message transmitted from the access network device to the core network reaches the user plane function first. To reduce a message transmission delay between in-vehicle telematics terminals, the user plane function may be responsible for uplink and downlink message transmission from/to the in-vehicle telematics terminals.

Operation 304: The user plane function forwards the vehicle message to an edge computing device.

In all embodiments of the present disclosure, the edge computing device may be deployed at the UPF side and responsible for scheduling vehicle messages. Hence, after receiving the vehicle message, the user plane function may not forward the message to a control plane device of the core network, but forwards the message to the edge computing device, such that the edge computing device can perform message scheduling.

In all embodiments of the present disclosure, in order to further reduce the message transmission delay, the user plane function may forward the vehicle message to the edge computing device located nearby, for example, to its nearest edge computing device.

Operation 305: The edge computing device receives the vehicle message forwarded from the user plane function.

In all embodiments of the present disclosure, the platooning-based driving system may provide a message transmission service for a single platoon or may provide the message transmission service for multiple platoons. That is, the edge computing device may receive the vehicle messages transmitted by different platooning vehicles in the same platoon, or may receive vehicle messages transmitted by different platooning vehicles among multiple platoons.

Operation 306: The edge computing device schedules received vehicle messages.

When data communication is implemented using the V2X broadcast, priority control on the transmitted data cannot be realized. Different from the above case, because herein the vehicle messages are transmitted to the edge computing device, the edge computing device may perform message scheduling on the received messages first to implement the priority control on the messages.

In all embodiments of the present disclosure, the edge computing device may schedule the message according to the transmission time of the vehicle messages or according to both the transmission time and priorities of the vehicle messages.

When the platooning-based driving system provides message transmission services for multiple platoons simultaneously, the edge computing device needs to distinguish the platoons to which each vehicle message belongs, such that the scheduling is applied to vehicle messages from the same platoon.

In all embodiments of the present disclosure, when there are at least two vehicle messages (which may be transmitted by the same in-vehicle telematics terminal or different in-vehicle telematics terminals) that are to be forwarded, the edge computing device may determine priorities of the messages when scheduling these messages. A vehicle message having a higher priority would be transmitted to an in-vehicle telematics terminal serving as its destination (i.e., the in-vehicle telematics terminal configured for receiving the vehicle message, hereinafter called destination terminal of the vehicle message) earlier after the scheduling.

Operation 307: The edge computing device transmits the scheduled vehicle message to the user plane function.

After a sequence of the vehicle messages is obtained through the scheduling , the edge computing device transmits the vehicle messages to the user plane function according to the sequence.

Operation 308: The user plane function receives the scheduled vehicle message transmitted by the edge computing device.

Operation 309: The user plane function forwards the scheduled vehicle message to an in-vehicle telematics terminal other than the in-vehicle telematics terminal transmitting the vehicle message.

Herein the user plane function forwards the received vehicle message to the in-vehicle telematics terminal(s), other than the in-vehicle telematics terminal transmitting the vehicle message (hereinafter also called the source terminal of the vehicle message), in the platoon. Thereby, the V2V message transmission is implemented.

After receiving the vehicle message, the other in-vehicle telematics terminal(s) may parse the vehicle message to obtain data in the vehicle message and transmit the data to the in-vehicle computer, so that the in-vehicle computer controls driving of the vehicle according to the data. Details are not described herein.

In summary, after the vehicles in the platoon use their in-vehicle telematics terminal to transmit the vehicle messages to the core network via the communication network, the user plane function forwards the vehicle messages to the edge computing device, and the edge computing device schedules the vehicle messages from the vehicles in the platoon and forwards each vehicle message to the in-vehicle telematics terminal(s) mounted on vehicle(s), other than the vehicle transmitting the vehicle message, in the platoon via the user plane function. Thereby, the message broadcasting among the vehicles in the vehicle platoon is implemented. In the message transmission, dedicated V2X devices are not necessary, and only general in-vehicle telematics terminals are required. Hence, driving costs of the platoon are reduced. In addition, the in-vehicle telematics terminals do not use V2X direct communication, which avoids co-channel interference. Stability of the transmission of the vehicle messages is improved, and safety of the driving of the platooning vehicles is further improved.

In order avoid a case that the other in-vehicle telematics terminal(s) do not receive the forwarded vehicle message correctly due to factors such as network fluctuation, in all embodiments of the present disclosure, after receiving the forwarded vehicle message, the destination terminal may transmit an acknowledgement to the edge computing device via the communication network, where the acknowledgement indicates a status of receiving . If the acknowledgement indicates that the message is successfully received, the edge computing device does not need to re-forward the message. If the acknowledgement indicates that the received message is incorrect or the acknowledgement is not received by the edge computing device within a preset duration, the edge computing device retransmits the message.

In actual application, vehicle messages transmitted by different platooning vehicles in the platoon and vehicle messages of different types have different degrees of impact on the safety of the platooning-based driving. If sequential message scheduling is performed based only on the transmission time of the messages, driving abnormality may occur when an important message is not forwarded in time. In order to improve the safety of the platooning-based driving, the edge computing device may perform the message scheduling according to the priorities of the vehicle messages. An embodiment is illustrated below.

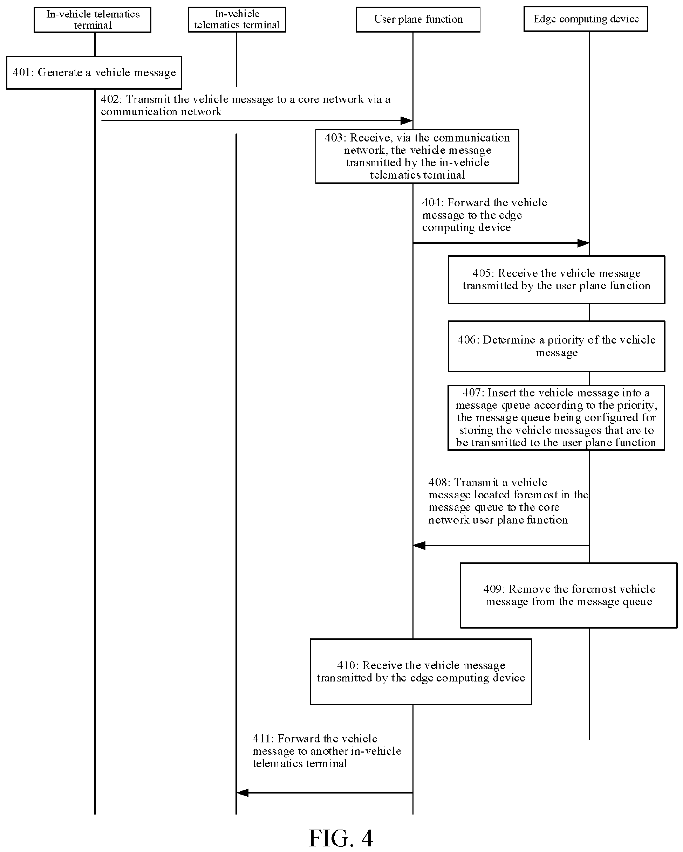

FIG. 4 is a flowchart of a method for transmitting messages according to another embodiment of the present disclosure. It is assumed that the method is applied to the platooning-based driving system as shown in FIG. 2. The method includes the following operations.

Operation 401: An in-vehicle telematics terminal generates a vehicle message.

In all embodiments of the present disclosure, the vehicle message may carry an identifier (hereinafter called priority identifier) indicating the priority of the vehicle message. Correspondingly, the edge computing device may determine the priority of the vehicle message directly through parsing the priority identifier from the vehicle message.

In all embodiments of the present disclosure, the in-vehicle telematics terminal may determine the priority of the vehicle message with reference to a parameter of the vehicle message and then generates the vehicle message comprising a priority identifier. Different priorities are indicated using different priority identifiers.

For example, the priorities of vehicle messages are categorized into three levels: a first priority, a second priority, and a third priority, of which the priority identifiers are 1, 2, and 3, respectively.

It is appreciated that the quantity of the levels and specific priority identifiers may be configured otherwise, which is not limited herein.

In all embodiments of the present disclosure, the priority may be indicated by the parameter of the vehicle message. The parameter may comprises a first indicator indicating a source vehicle carrying the source terminal of the vehicle message and a second indicator indicating a type of an event, which are carried by the vehicle message.

The first identifier uniquely identifies the source vehicle in the platoon. In all embodiments of the present disclosure, the first identifier may be an identifier of the in-vehicle telematics terminal or may be an identifier of a position of a vehicle in the platoon. For example, the first identifier being "1" indicates that the source terminal mounted on a lead vehicle in the platoon, and first identifier being "2" indicates that the source terminal mounted on the 2^{nd} vehicle (e.g., a vehicle directly behind the lead vehicle) in the platoon, and so on. A specific form of the first identifier is not limited herein.

The second identifier identifies the type of the event which is indicated the message. Different second identifiers indicate different degrees of emergency/importance of the event (in other words, the "type" is determined by emergency or importance of the event). In all embodiments of the present disclosure, the second identifier may have a value indicating a common event or a value indicating a special event, where the degree of emergency or importance of the common event is lower than that of the special event.

In all embodiments of the present disclosure, the common event may be an event that periodically occurs, e.g., the in-vehicle telematics terminal periodically reports the status of the vehicle. The special event may be a sudden event, for example, an emergency. Specific types indicated by the second identifier are not limited herein.

In all embodiments of the present disclosure, the in-vehicle telematics terminal determines the priority according to the parameter in a following manner
1. The priority of the vehicle message is determined to be at a first level, when the first indicator indicates that the source vehicle is a lead vehicle of the platoon and the second indicator indicates the event is of a first type.

In all embodiments of the present disclosure, the first identifier may be determined according to whether the vehicle is the lead vehicle in the platoon, and when the vehicle is the lead vehicle in the platoon, the in-vehicle telematics terminal further determines the second identifier is according to whether the event is of the first type (e.g., being the special event).

Because the lead vehicle in the platoon is usually a command center of the entire platoon, the vehicle message transmitted by the lead vehicle in the platoon has a higher priority. In addition, because the vehicle message transmitted in response to the special event needs to be forwarded to another in-vehicle telematics terminal in time to enable the other vehicle to take a corresponding action, the vehicle message for the special event usually has a higher priority. In conclusion, when the vehicle message is transmitted by the lead vehicle in the platoon and the event is the special event, the in-vehicle telematics terminal determines that the vehicle message shall have the priority of the first level, that is, a highest priority, to ensure driving safety of the platoon in emergency.

The in-vehicle telematics terminal may further assign sub-levels under the first level to indicate more detailed priorities according to a subtype of the event under the first type. This is not limited herein.

2. The priority of the vehicle message is determined to be at a second level, when the first indicator indicates that the source vehicle is a lead vehicle of the platoon and the second indicator indicates the event is of a second type (e.g., being the common event).

The common event has less impact on driving safety than the special event. Therefore, when the vehicle message is transmitted by the lead vehicle in the platoon and the event is the common event, the in-vehicle telematics terminal determines that the vehicle message shall have the priority of the second level. The priority at the second level is lower than the priority at the first level.

The in-vehicle telematics terminal may further assign sub-levels under the second level to indicate more detailed priorities according to a subtype of the event under the second type. This is not limited herein.

3. The priority of the vehicle message is determined to be at a third level, when the first indicator indicates that the source vehicle is in the platoon and not the lead vehicle.

Generally, the vehicle message transmitted by a non-lead vehicle (that is, the following vehicle) in the platoon mainly reports the status of the vehicle and thus has low impact on driving safety of the platoon. Therefore, when the vehicle message is transmitted by the following vehicle, the in-vehicle telematics terminal determines that the vehicle message shall have the priority at the third level. The priority at the third level is lower than the priority at the second level.

Because driving the vehicle closer to the head of the platoon would affect driving its behind vehicles, the vehicle that is closer to the lead vehicle has greater impact on the driving safety. In order to further improve the driving safety, the in-vehicle telematics terminal may configure more detailed levels of the priority for the vehicle message transmitted by the following vehicle.

In all embodiments of the present disclosure, when the first indicator indicates that the source vehicle is in the platoon and not the lead vehicle, the in-vehicle telematics terminal may determine a sub-level of the third level for the vehicle message with reference to the position of the source vehicle. The smaller the distance between the position of the source vehicle and a position of the lead vehicle in the platoon is, the higher the priority indicated by the sub-level is.

The position may represent a positional order of a vehicle in the platoon. For example, position 1 indicates that the vehicle is the lead vehicle at the head of the platoon, and platooning position 2 indicates that the vehicle is immediately behind the lead vehicle in the platoon.

In all embodiments of the present disclosure, the position of the following vehicle in the platoon may be determined using the first identifier.

A following vehicle closer to the lead vehicle is ahead of more vehicles in the platoon. Hence, a sub-level indicating a higher priority may be assigned to the vehicle message transmitted by this vehicle.

As an example, when the platoon includes five platooning vehicles, the vehicle message transmitted by the following vehicle at position 2 has a priority at level 3.1, the vehicle message transmitted by the following vehicle at position 3 has a priority at level 3.2, the vehicle message transmitted by the following vehicle at position 4 has a priority at level 3.3, and the vehicle message transmitted by the following vehicle at position 5 has a priority at level 3.4. The priority at level 3.1 is higher than the priority at level 3.2 that is higher than the priority at level 3.3 that is higher than the priority at level 3.4.

In all embodiments of the present disclosure, the in-vehicle telematics terminal may determine the priority. Alternatively, or additionally, the vehicle message may carry the parameter but does not carry the priority identifier. In this case, the edge computing device may determine the priority of the vehicle message according to the parameter. A manner for determining the priority by the edge computing device is consistent with a manner of determining the priority by the in-vehicle telematics terminal.

In all embodiments of the present disclosure, the in-vehicle telematics terminal may generate the vehicle message carrying the first identifier and the second identifier.

Operation 402: The in-vehicle telematics terminal transmits the vehicle message to a core network through a communication network.

Operation 403: A user plane function receives, via the communication network, the vehicle message transmitted by the in-vehicle telematics terminal.

Operation 404: The user plane function forwards the vehicle message to the edge computing device.

Operation 405: The edge computing device receives the vehicle message transmitted by the user plane function.

Specific implementations of operations 402 to 405 may refer to that of operations 302 to 305. Details are not described herein again.

Operation 406: The edge computing device determines the priority of the vehicle message.

In all embodiments of the present disclosure, when the priority of the vehicle message is indicated by the priority identifier in the vehicle message, the edge computing device may directly parse the priority identifier from the vehicle message and determine the priority using the priority identifier.

Otherwise, when the vehicle message does not carry the priority identifier but carries the parameter, the edge computing device may parse the parameter from the vehicle message and determine the priority of the vehicle message using the parameter.

The priority may be determined in various manners, so that the priority can be configured flexibly and diversely set, and the solution can be adapted to more message transmission scenarios.

In all embodiments of the present disclosure, the edge computing device may determine the priority of the vehicle message as follows. It is determined that the priority of the vehicle message is at a first level, when the first indicator indicates that the source vehicle is a lead vehicle of the platoon and the second indicator indicates the event is of a first type.

It is determined that the priority of the vehicle message is at a second level, when the first indicator indicates that the source vehicle is a lead vehicle of the platoon and the second indicator indicates the event is of a second type.

It is determined that the priority of the vehicle message is at a third level, when the first indicator indicates that the source vehicle is in the platoon and not the lead vehicle.

Further, when the first identifier indicates that the source vehicle is in the platoon and not the lead vehicle, the edge computing device may determine a position of the source vehicle in the platoon and a sub-level of the third level for the vehicle message using the position of the source vehicle, where the priority indicated by the sub-level is heightened as a distance between the position of the source vehicle and a position of the lead vehicle in the platoon decreases.

A specific manner of determining the priority by the edge computing device may refer to the manner of determining the priority by the in-vehicle telematics terminal. Details are not described herein again.

Operation 407: The edge computing device inserts the vehicle message into a message queue according to the priority, where the message queue is configured for storing the vehicle messages that are to be transmitted to the user plane function.

In order to implement sequential forwarding of vehicle messages with reference to the levels of emergency or importance, the edge computing device may maintain the message queue storing vehicle messages that are received but has not been forwarded by the edge computing device.

When scheduling messages of multiple platoons simultaneously, the edge computing device may maintain a respective message queue for each platoon and inserts the vehicle message according to the priority into the message queue for the platoon from which the vehicle message is transmitted.

A manner of inserting the vehicle message into the message queue may be as follows. In all embodiments of the present disclosure, a higher priority of a vehicle message may indicate a shorter distance in the message queue between the vehicle message and a head of the message queue, that is, the vehicle message with a higher priority is closer to the head of the message queue.

In all embodiments of the present disclosure, when there are at least two vehicle messages that have the same priority, the edge computing device inserts the vehicle messages into the message queue according to their transmission time, that is, the earlier the vehicle message is transmitted from the UPF to the edge computing device, the closer it is to the head of the message queue.

As an example, the message queue maintained by the edge computing device is as shown in Table 1.

**Table 1**

| Sequential number in the message queue | 1 | 2 | 3 |
|---|---|---|---|
| Vehicle message | Message A | Message B | Message C |
| Priority | First level | Second level | Third level |
| Transmission time | 10:10:30 | 10:10:29 | 10:10:28 |

When message D that is of the special event and transmitted by the lead vehicle in the platoon is received at 10:10:31, because the priority of the vehicle message is at the first level and transmission time of the message D is after that of the message A, the message queue is as shown in Table 2 after the message D is added.

**Table 2**

| Sequential number in the message queue | 1 | 2 | 3 | 4 |
|---|---|---|---|---|
| Vehicle message | Message A | Message D | Message B | Message C |
| Priority | First level | First level | Second level | Third level |
| Transmission time | 10:10:30 | 10: 10:31 | 10:10:29 | 10:10:28 |

Operation 408: The edge computing device transmits a first vehicle message to the user plane function, wherein the first vehicle message is the vehicle message located foremost in the message queue, and the priority of the first vehicle message is highest among all vehicle messages in the message queue.

Each time the edge computing device forwards a message, the edge computing device obtains the vehicle message from the head (i.e., the foremost place) of the message queue, that is, the vehicle message having the highest priority in the message queue is first transmitted to the user plane function. Then, the user plane function forwards this vehicle message to the destination vehicle in the platoon.

With reference to the message queue as shown in Table 2, the edge computing device transmits the message A in the message queue first to the user plane function.

Operation 409: The edge computing device removes the first vehicle message from the message queue.

In order to avoid the same vehicle message from being repeatedly forwarded, each time a message is transmitted from the edge computing device, the edge computing device removes the message from the head of the message queue. With reference to the message queue as shown in Table 2, after the edge computing device transmits the message A to the user plane function, an updated message queue is as shown in Table 3.

**Table 3**

| Sequential number in the message queue | 1 | 2 | 3 |
|---|---|---|---|
| Vehicle message | Message D | Message B | Message C |
| Priority | First level | Second level | Third level |
| Transmission time | 10: 10:31 | 10:10:29 | 10:10:28 |

Operation 410: The user plane function receives the vehicle message transmitted by the edge computing device.

Operation 411: The user plane function forwards the scheduled vehicle message to an in-vehicle telematics terminal other than the in-vehicle telematics terminal transmitting the vehicle message.

Specific implementations of operations 410 and 411 may refer to operations 308 and 309. Details are not described herein again.

Here the priority of the vehicle message is determined according to the parameter, and the received vehicle message is inserted into the message queue according to the priority. The edge computing device obtains a vehicle message from the head of the message queue and forwards the vehicle message to ensure that a vehicle message with a higher priority can be forwarded earlier to the destination vehicle. This helps improve safety in a driving process of the platoon.

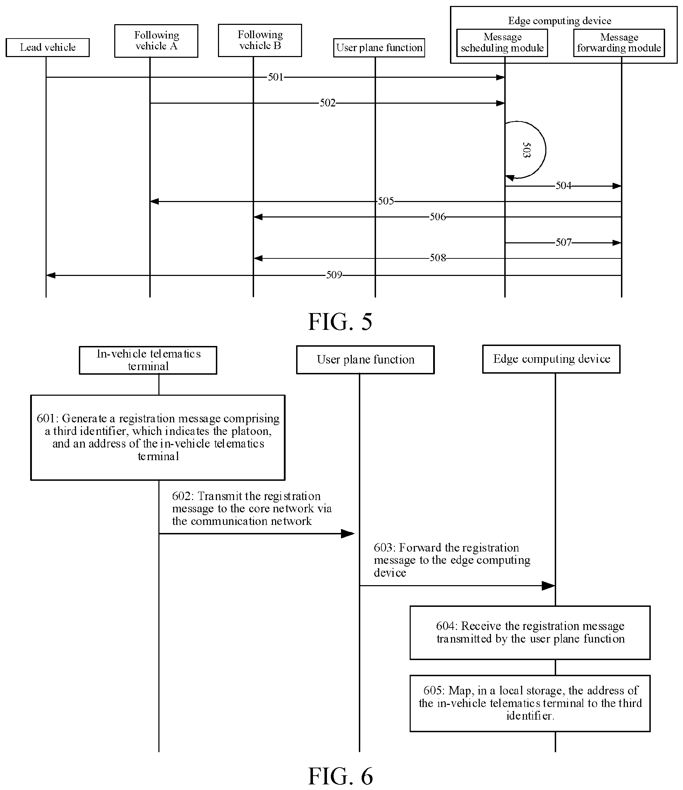

In an exemplary scenario, the platoon includes a lead vehicle and following vehicles A and B, and a message scheduling module and a message forwarding module is arranged in an edge computing device. A message transmission process in the platoon is as shown in FIG. 5.

Operation 501: The lead vehicle in the platoon transmits a vehicle message to the edge computing device via a user plane function.

Operation 502: The following vehicle A transmits a vehicle message to the edge computing device via the user plane function.

Operation 503: The message scheduling module of the edge computing device parses priority identifiers from the vehicle messages and sorts the messages according to the priorities indicated by the priority identifiers.

Because the priority of the message transmitted by the lead vehicle is higher than the priority of the message transmitted by the following vehicle, the vehicle message transmitted by the lead vehicle in the platoon is located prior to the vehicle message transmitted by the following vehicle in a message queue.

Operation 504: The message scheduling module of the edge computing device indicates the message forwarding module to forward the vehicle message transmitted by the lead vehicle in the platoon first.

Operation 505: The message forwarding module of the edge computing device forwards this vehicle message to the following vehicle A via the user plane function.

Operation 506: The message forwarding module of the edge computing device forwards this vehicle message to the following vehicle B via the user plane function.

Operation 507: The message scheduling module of the edge computing device indicates the message forwarding module to forward the vehicle message transmitted by the following vehicle.

Operation 508: The message forwarding module of the edge computing device forwards this vehicle message to the following vehicle B via the user plane function.

Operation 509: The message forwarding module of the edge computing device forwards this vehicle message to the lead vehicle via the user plane function.

When the edge computing device forwards the messages, it may be desirable to determine the destination vehicle(s) in the platoon to which the message is forwarded. In order ensure accuracy of the message forwarding, in all embodiments of the present disclosure, the in-vehicle telematics terminal disposed in each platooning vehicle may perform registration at the edge computing device in advance, so that the edge computing device can perform message forwarding with reference to vehicle registration information.

As shown in FIG. 6, a vehicle registration process before the message transmission may include the following operations.

Operation 601: An in-vehicle telematics terminal generates a registration message comprising: a third identifier, which indicates the platoon, and an address of the in-vehicle telematics terminal transmitting the vehicle message.

In all embodiments of the present disclosure, before the platooning-based driving, the in-vehicle telematics terminal mounted on each vehicle performs vehicle registration at the edge computing device. The vehicle registration process refers to transmitting the registration message comprising the third identifier and the address of the in-vehicle telematics terminal. The third identifiernd is unique, and may be set by a user, or may be allocated by the edge computing device from a pool of third identifiernds.

In all embodiments of the present disclosure, the address may be an internet protocol (IP) address of the in-vehicle telematics terminal. Correspondingly, messages are subsequently forwarded according to the IP address.

It is appreciated that the registration message may further include the foregoing first identifier, an identifier indicating whether the vehicle is a lead vehicle, or the like. This is not limited herein.

Operation 602: The in-vehicle telematics terminal transmits the registration message to the core network via the communication network.

Operation 603: The user plane function forwards the registration message to the edge computing device.

After receiving the registration message, the user plane function forwards the registration message to the edge computing device to complete the vehicle registration.

Operation 604: The edge computing device receives the registration message transmitted by the user plane function.

Operation 605: The edge computing device maps, in a local storage, the address of the in-vehicle telematics terminal to the third identifier.

The registration messages transmitted by the in-vehicle telematics terminals in the same platoon include the same third identifier. Accordingly, the edge computing device stores the third identifier in association (i.e., the above mapping) with the addresses of the in-vehicle telematics terminals.

In all embodiments of the present disclosure, after completing associated storage, the edge computing device may transmit a response to the in-vehicle telematics terminals via the user plane function to notify the in-vehicle telematics terminals that the vehicle registration has been completed. As an example, mapping between the third identifiers and the addresses may be stored in the edge computing device as shown in Table 4.

**Table 4**

| Third identifiers | Terminal address |
|---|---|
| Platoon 001 | IP 1, IP 2, IP 3, and IP 4 |
| Platoon 002 | IP 1, IP 5, IP 6, and IP 7 |
| Platoon 003 | IP 8, IP 9, and IP 10 |

In all embodiments of the present disclosure, besides vehicle registration, the in-vehicle telematics terminal may further perform vehicle deregistration. As an example, the in-vehicle telematics terminal generates a vehicle deregistration message comprising the third identifier and its address and transmits the vehicle deregistration message to the core network, further to the edge computing device, via the communication network. After receiving the vehicle deregistration message, the edge computing device removes the address of the to-be-deregistered terminal from the group of addresses mapped to the third identifier.

In all embodiments of the present disclosure, the in-vehicle telematics terminal may further perform platoon deregistration. As an example, the in-vehicle telematics terminal generates a platoon deregistration message comprising the third identifier and transmits the platoon deregistration message to the core network further to the edge computing device via the communication network. After receiving the platoon deregistration message, the edge computing device deletes the third identifier and the addresses that are mapped to the third identifier.

Following operations may be included when the edge computing device transmits the scheduled vehicle message to the user plane function.
1. Obtain the third identifier from the vehicle message, where the third identifier indicates the platoon to which the source terminal belongs.

The same vehicle may belong to different platoons. Hence, the vehicle message transmitted by the in-vehicle telematics terminal may comprise the third identifier of the platoon to which the source terminal currently belongs, such that the message can be correctly forwarded. Thus, the edge computing device obtains the third identifier from the vehicle message to determine to the vehicle(s) that are in the platoon and serve as a destination of the message.

In an example as shown in Table 4, the edge computing device obtains the third identifier "platoon 001" from the vehicle message.

2. Determine address(es) of the destination terminal(s) based on the address of the source terminal of the vehicle message and the addresses of all in-vehicle telematics terminals in the platoon.

Because the vehicle message only needs to be forwarded to in-vehicle telematics terminal(s) other than the source terminal, the edge computing device first obtains the addresses of all in-vehicle telematics terminals in the platoon according to the third identifier and then determines the address(es) other than the address of the source terminal to serve as the address(es) of the destination terminal(s).

In an example as shown in Table 4, when the address of the source terminal is IP 1, the edge computing device determines that the addresses of the destination terminal s are IP 2, IP 3, and IP 4.

3. Transmit the vehicle message that comprises the address(es) of the destination terminal(s) to the user plane function.

The edge computing device transmits the vehicle message including the address(es) of the destination terminal(s) to the user plane function, such that the user plane function forwards the vehicle message to the receivers in-vehicle telematics terminal(s) via the communication network according to the address(es) of the destination terminal(s) .

In the foregoing embodiments, the user plane function is mainly responsible for message transmission, and actual scheduling and control is performed by the edge computing device. In order to further reduce a transmission delay, alternatively or additionally, the edge computing device may configure a message scheduling policy in the user plane function, and the user plane function performs the foregoing message scheduling and forwarding according to the configuration.

In all embodiments of the present disclosure, the edge computing device may transmit information defining a message scheduling policy for the platoon to the user plane function, where the message scheduling policy indicates how the vehicle messages from the platoon are to be scheduled.

In all embodiments of the present disclosure, different platoons may have the same message scheduling policy or may have different message scheduling policies.

In all embodiments of the present disclosure, in order to avoid excessively high processing pressure of the user plane function, the edge computing device may put a message scheduling policy for a part of the vehicles in the platoon at the user plane function side. When receiving the vehicle message(s), the user plane function checks whether it (i.e., the local message scheduling policy) supports a function scheduling on the vehicle message(s) is supported.

When the user plane function does not support the function of scheduling the vehicle message(s), the user plane function forwards the vehicle message(s) to the edge computing device, and the edge computing device schedules the vehicle message(s).

When the user plane function supports the function of scheduling the vehicle message(s), the user plane function performs schedules the vehicle message(s) and forwards the scheduled vehicle message(s) to the destination terminal(s) of the vehicle message(s).

A manner of the user plane function performing the message scheduling refers to the foregoing manner of the edge computing device performing the message scheduling. Details are not described herein against.

In all embodiments of the present disclosure, the user plane function may determine whether the message scheduling policy of a first platoon is locally stored, and then the user plane function determines that it supports the function of scheduling the vehicle message(s) accordingly. When the message scheduling policy of the first platoon is stored by the user plane function, the user plane function determines that it supports the function of scheduling the vehicle message(s). When the message scheduling policy of the first platoon is not stored by the user plane function, the user plane function determines that it does not support the function of scheduling the vehicle message(s).

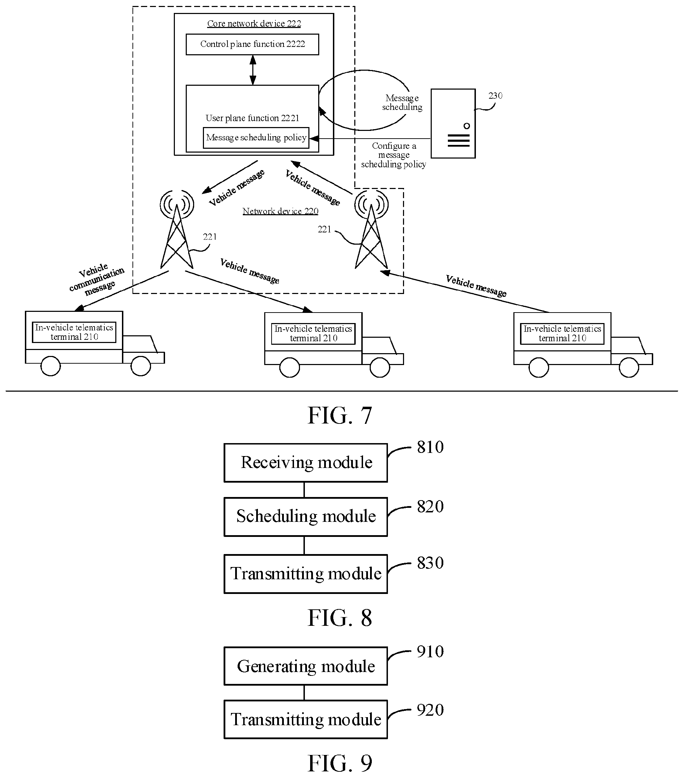

As shown in FIG. 7, an edge computing device 230 configures the message scheduling policy of the platoon in advance in the user plane function 2221. Assuming the user plane function 2221 supports the function of scheduling the messages from the platoon, after the lead vehicle in the platoon transmits a vehicle message to the network device 220 via its in-vehicle telematics terminal 210, the user plane function 2221 does not need to forward the vehicle message to the edge computing device 230. Instead, the user plane function 2221 directly performs message scheduling using the message scheduling policy and forwards the scheduled vehicle message to a vehicle other than the lead vehicle in the platoon via a communication network, such that transmission of the vehicle message in the platoon is implemented without data communication between the user plane function 2221 and the edge computing device 230. A message transmission delay is reduced.

Here the edge computing device configures the message scheduling policy in the user plane function, the user plane function performs the message scheduling and forwarding using the policy, so that a transmission delay caused by the data communication between the user plane function and the edge computing device is avoided. The message transmission delay is reduced, and driving safety of the platoon is improved.

In the foregoing embodiments, operations performed by the in-vehicle telematics terminal may be independently implemented as a method for transmitting messages on the in-vehicle telematics terminal side, operations performed by the user plane function may be independently implemented as a method for transmitting messages on the user plane function side, and operations performed by the edge computing device may be independently implemented as a method for transmitting messages on the edge computing device side. Details are not described herein again.

FIG. 8 is a structural block diagram of an apparatus for transmitting messages according to an embodiment of the present disclosure. The apparatus comprises a receiving module 810, a scheduling module 820, and a transmitting module 830.

The receiving module 810 is configured for receiving vehicle messages from a user plane function in a core network, where the vehicle messages are transmitted from a group of in-vehicle telematics terminals via a communication network to the user plane function, and each in-vehicle telematics terminal in the group is mounted on a respective vehicle in a platoon.

The scheduling module 820 is configured for scheduling the received vehicle messages.

The transmitting module 830 is configured for transmitting the scheduled vehicle messages to the user plane function for being forwarded via the communication network to the group of in-vehicle telematics terminals, where a source terminal is one of the in-vehicle telematics terminals which transmits said vehicle message to the user plane function, a destination terminal is another one of the in-vehicle telematics terminals which receives said vehicle message from the user plane function.

In all embodiments of the present disclosure, the scheduling module 820 may be configured for: determining a priority of a vehicle message among the vehicle messages; and inserting the vehicle message into a message queue according to the priority, wherein the message queue is configured for storing the vehicle messages that are to be transmitted to the user plane function.

The transmitting module 830 is configured for transmitting a first vehicle message to the user plane function, where the first vehicle message is the vehicle message located foremost in the message queue, and the priority of the first vehicle message is highest among all vehicle messages in the message queue.

The scheduling module 820 is configured for removing the first vehicle message from the message queue.

In all embodiments of the present disclosure, the scheduling module 820 may configured for: parsing, from the vehicle message, an identifier indicating the priority, wherein the identifier is added into the vehicle message by the source terminal of the vehicle message; or parsing a parameter from the vehicle message and determining the priority of the vehicle message according to the parameter.

In all embodiments of the present disclosure, the parameter may comprise a first indicator indicating a source vehicle carrying the source terminal of the vehicle message and a second indicator indicating a type of an event.

The scheduling module 820 is configured for: determining that the priority of the vehicle message is at a first level, when the first indicator indicates that the source vehicle is a lead vehicle of the platoon and the second indicator indicates the event is of a first type; determining that the priority of the vehicle message is at a second level, when the first indicator indicates that the source vehicle is a lead vehicle of the platoon and the second indicator indicates the event is of a second type; and determining that the priority of the vehicle message is at a third level, when the first indicator indicates that the source vehicle is in the platoon and not the lead vehicle.

The priority at the first level is higher than the priority at the second level, and the priority at the second level is higher than the priority at the third level.

In all embodiments of the present disclosure, the scheduling module 820 may be further configured for: determining a position of the source vehicle in the platoon when the first identifier indicates that the source vehicle is in the platoon and not the lead vehicle; and determining a sub-level of the third level for the vehicle message using the position of the source vehicle, wherein the priority indicated by the sub-level is heightened as a distance between the position of the source vehicle and a position of the lead vehicle in the platoon decreases.

In all embodiments of the present disclosure, the transmitting module 830 may be configured for: parsing, from a vehicle message among the scheduled vehicle messages, a third identifier indicating the platoon; determining an address of the destination terminal of the vehicle message according to an address of the source terminal of the vehicle message and all addresses mapped to the third identifier; adding the address of the destination terminal into the vehicle message to obtain a modified vehicle message; and transmitting the modified vehicle message to the user plane function.

In all embodiments of the present disclosure, the receiving module 810 may be further configured to: receiving a registration message from the user plane function, wherein the registration message is transmitted by the source terminal of the vehicle message via the communication network to the core network, and the registration message comprises the third identifier and the address of the source terminal of the vehicle message; and mapping, in a storage module of the apparatus, the address of the source terminal to the third identifier.

FIG. 9 is a structural block diagram of an apparatus for transmitting messages according to another embodiment of the present disclosure. The apparatus is in an in-vehicle telematics terminal mounted on a vehicle in a platoon and comprises a generating module 910 and a transmitting module 920.

The generating module 910 is configured for generating a vehicle message.

The transmitting module 920 is configured for transmitting the vehicle message to a user plane function in a core network via a communication network for being further transmitted to an edge computing device to an edge computing device, where the edge computing device is configured to schedule a plurality of vehicle messages comprising the vehicle message and forward the scheduled vehicle message to another in-vehicle telematics terminal via the user plane function, and the another in-vehicle telematics terminal is mounted on another vehicle in the platoon.

In all embodiments of the present disclosure, the generating module 910 may be configured for: determining a priority of the vehicle message and generating the vehicle message comprising an identifier indicating the priority; or generating the vehicle message comprising a parameter, where the parameter serves as a basis for determining the priority

In all embodiments of the present disclosure, the parameter may comprise a first indicator indicating the vehicle and a second indicator indicating a type of an event. The priority of the vehicle message is at a first level, when the first indicator indicates that the vehicle is a lead vehicle of the platoon and the second indicator indicates the event is of a first type, the priority of the vehicle message is at a second level, when the first indicator indicates that the vehicle is a lead vehicle of the platoon and the second indicator indicates the event is of a second type, the priority of the vehicle message is at a third level, when the first indicator indicates that the vehicle is not the lead vehicle in the platoon, and the priority at the first level is higher than the priority at the second level, and the priority at the second level is higher than the priority at the third level.

In all embodiments of the present disclosure, when the first indicator indicates that the vehicle is not the lead vehicle in the platoon, a position of the source vehicle in the platoon is determined, a sub-level of the third level for the vehicle message is determined using the position of the source vehicle, where the priority indicated by the sub-level is heightened as a distance between the position of the source vehicle and a position of the lead vehicle in the platoon decreases.

In all embodiments of the present disclosure, the generating module 910 is further configured for generating a registration message comprising: a third identifier, which indicates the platoon, and an address of the in-vehicle telematics terminal of the vehicle message. The transmitting module 920 is further configured for transmitting the registration message to the user plane function in the core network via the communication network for being further transmitted to the edge computing device. The edge computing device is configured for: mapping, in a local storage of the edge computing device, the address of the in-vehicle telematics terminal to the third identifier; and determining an address of the another in-vehicle telematics terminal according to the address of the in-vehicle telematics terminal and all addresses mapped to the third identifier.

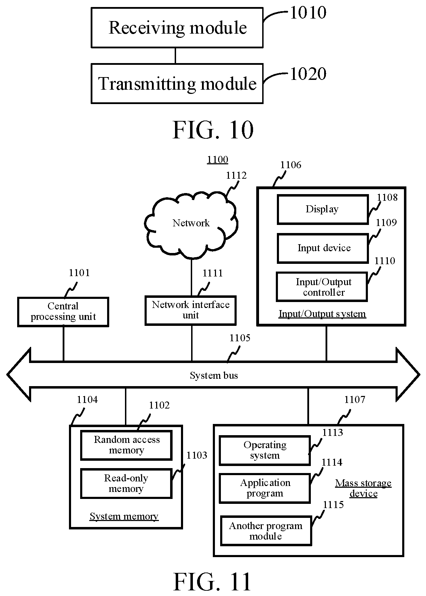

FIG. 10 is a structural block diagram of an apparatus for transmitting messages according to another exemplary embodiment of the present disclosure. The apparatus comprises: a receiving module 1010 and a transmitting module 1020.

The receiving module 1010 is configured for receiving, via a communication network, vehicle messages from a group of in-vehicle telematics terminals, where each in-vehicle telematics terminal in the group is mounted on a respective vehicle in a first platoon.

The transmitting module 1020 is configured for: forwarding the vehicle messages to an edge computing device for being scheduled, or scheduling the received vehicle messages.

The receiving module 1010 is further configured for receiving the scheduled vehicle messages from the edge computing device.

The transmitting module 1020 is further configured for forwarding, via the communication network, the scheduled vehicle messages to the group of in-vehicle telematics terminals. For each vehicle message, a source terminal is one of the in-vehicle telematics terminals which transmits said vehicle message to the user plane function, a destination terminal is another one of the in-vehicle telematics terminals which receives said vehicle message from the user plane function.

In all embodiments of the present disclosure, the transmitting module 1020 may be configured for: when the user plane function does not support a function of scheduling the vehicle messages, forwarding the vehicle message to the edge computing device.

The apparatus further comprises a scheduling module configured for: when the user plane function supports the function of scheduling the vehicle message, scheduling the received vehicle messages.

In all embodiments of the present disclosure, the receiving module 1010 may be further configured for receiving one or more scheduling policies from the edge computing device for local storage, where each scheduling policy indicates a manner of scheduling vehicle messages transmitted from in-vehicle telematics terminals of a respective platoon.

The apparatus further comprise a determining module configured for: determining that the user plane function supports the function of scheduling the vehicle message, when the message scheduling policy of the first platoon is stored by the user plane function; or determining that the user plane function does not support a function of scheduling the vehicle messages, when the message scheduling policy of the first platoon is not stored by the user plane function.

FIG. 11 is a schematic structural diagram of a computer device according to an embodiment of the present disclosure. The computer device may implement the in-vehicle telematics terminal, the user plane function, or the edge computing device in the foregoing embodiments.

The computer device 1100 includes a central processing unit (CPU) 1101, a system memory 1104 including a random-access memory 1102 and a read-only memory 1103, and a system bus 1105 connecting the system memory 1104 and the central processing unit 1101. The computer device 1100 further includes a basic input/output (I/O) system 1106 assisting in information transmission between components in the computer, and a mass storage device 1107 configured to store an operating system 1113, an application program 1114, and another program module 1115.

The basic input/output system 1106 includes a display 1108 configured to display information and an input device 1109 like a mouse or a keyboard that is configured to input information by a user. The display 1108 and the input device 1109 are both connected to the central processing unit 1101 through an input/output controller 1110 connected to the system bus 1105. The basic input/output system 1106 may further include the input/output controller 1110 to be configured to receive and process inputs from a plurality of other devices such as a keyboard, a mouse, and an electronic stylus. Similarly, the input/output controller 1110 further provides an output to a display screen, a printer, or another type of output device.

The mass storage device 1107 is connected to the central processing unit 1101 through a mass storage controller (not shown) connected to the system bus 1105. The mass storage device 1107 and a computer-readable medium associated therewith provide non-volatile storage for the computer device 1100. In other words, the mass storage device 1107 may include the computer-readable medium (not shown) like a hard disk or a drive.

Without loss of generality, the computer-readable medium may include a computer storage medium and a communication medium. The computer storage medium includes volatile and non-volatile media, and removable and non-removable media implemented by using any method or technology configured for storing information such as computer-readable instructions, data structures, program modules, or other data. The computer storage medium includes a random-access memory (RAM), a read-only memory (ROM), a flash memory or another solid-state storage technology, a compact disc read-only memory (CD-ROM), a digital versatile disc (DVD) or another optical memory, a magnetic cassette, a magnetic tape, a magnetic disk memory, or another magnetic storage device. Certainly, a person skilled in the art may learn that the computer storage medium is not limited to the foregoing several types. The system memory 1104 and the mass storage device 1107 may be collectively referred to as a memory.

The memory stores one or more programs. The one or more programs are configured to be executed by one or more central processing units 1101. The one or more programs include instructions for implementing the foregoing method. The central processing unit 1101 executes the one or more programs to implement the method provided in the foregoing method embodiments.

According to embodiments of the present disclosure, the computer device 1100 may further be connected, through a network like an internet, to a remote computer on the network for running. In other words, the computer device 1100 may be connected to a network 1112 through a network interface unit 1111 connected to the system bus 1105 or may be connected to another type of network or a remote computer system (not shown) through the network interface unit 1111.

In addition, an embodiment of the present disclosure further provides a storage medium, configured to store a computer program. The computer program is configured for performing the method provided in the foregoing embodiments.

An embodiment of the present disclosure further provides a computer program product including a computer program, the computer program product, when run on a computer, enabling the computer to perform the method provided in the foregoing embodiments.

A person of ordinary skill in the art may understand that all or some of the steps of the foregoing embodiments may be implemented by hardware or may be implemented by a program instructing relevant hardware. The program may be stored in a computer-readable storage medium. The storage medium may be a read-only memory, a magnetic disk, an optical disc, or the like.

The foregoing descriptions are merely optional embodiments of the present disclosure but are not intended to limit the present disclosure.

## Claims

1. A method for transmitting messages, executable by an edge computing device, wherein the method comprises:
receiving vehicle messages from a user plane function in a core network, wherein the vehicle messages are transmitted from a group of in-vehicle telematics terminals via a communication network to the user plane function, and each in-vehicle telematics terminal in the group is mounted on a respective vehicle in a platoon;
scheduling the received vehicle messages; and
transmitting the scheduled vehicle messages to the user plane function for being forwarded via the communication network to the group of in-vehicle telematics terminals;
wherein for each vehicle message, a source terminal is one of the in-vehicle telematics terminals which transmits said vehicle message to the user plane function, the destination terminal is another one of the in-vehicle telematics terminals which receives said vehicle message from the user plane function.

2. The method according to claim 1, wherein
scheduling the received vehicle messages comprises:
determining a priority of a vehicle message among the vehicle messages; and
inserting the vehicle message into a message queue according to the priority, wherein the message queue is configured for storing the vehicle messages that are to be transmitted to the user plane function;
transmitting the scheduled vehicle messages to the user plane function comprises:
transmitting a first vehicle message to the user plane function, wherein the first vehicle message is the vehicle message located foremost in the message queue, and the priority of the first vehicle message is highest among all vehicle messages in the message queue; and
the method further comprises:
removing the first vehicle message from the message queue.

3. The method according to claim 2, wherein determining the priority of the vehicle message comprises:
parsing, from the vehicle message, an identifier indicating the priority, wherein the identifier is added into the vehicle message by the source terminal of the vehicle message; or
parsing a parameter from the vehicle message and determining the priority of the vehicle message according to the parameter.

4. The method according to claim 3, wherein:
the parameter comprises a first indicator indicating a source vehicle carrying the source terminal of the vehicle message and a second indicator indicating a type of an event;
determining the priority of the vehicle message according to the parameter comprises:
determining that the priority of the vehicle message is at a first level, when the first indicator indicates that the source vehicle is a lead vehicle of the platoon and the second indicator indicates the event is of a first type;
determining that the priority of the vehicle message is at a second level, when the first indicator indicates that the source vehicle is a lead vehicle of the platoon and the second indicator indicates the event is of a second type; and
determining that the priority of the vehicle message is at a third level, when the first indicator indicates that the source vehicle is in the platoon and not the lead vehicle; and
the priority at the first level is higher than the priority at the second level, and the priority at the second level is higher than the priority at the third level.

5. The method according to claim 4, wherein determining that the priority of the vehicle message is at the third level when the first indicator indicates that the source vehicle is in the platoon and not the lead vehicle comprises:
determining a position of the source vehicle in the platoon when the first identifier indicates that the source vehicle is in the platoon and not the lead vehicle; and
determining a sub-level of the third level for the vehicle message using the position of the source vehicle, wherein the priority indicated by the sub-level is heightened as a distance between the position of the source vehicle and a position of the lead vehicle in the platoon decreases.

6. The method according to claim 1, wherein transmitting the scheduled vehicle messages to the user plane function comprises:
parsing, from a vehicle message among the scheduled vehicle messages, a third identifier indicating the platoon;
determining an address of the destination terminal of the vehicle message according to an address of the source terminal of the vehicle message and all addresses mapped to the third identifier;
adding the address of the destination terminal into the vehicle message to obtain a modified vehicle message; and
transmitting the modified vehicle message to the user plane function.

7. The method according to claim 6, further comprising:
receiving a registration message from the user plane function, wherein the registration message is transmitted by the source terminal of the vehicle message via the communication network to the core network, and the registration message comprises the third identifier and the address of the source terminal of the vehicle message; and
mapping, in a local storage, the address of the source terminal to the third identifier.

8. A method for transmitting a message, executable by an in-vehicle telematics terminal mounted on a vehicle in a platoon, wherein the platoon comprises a plurality of vehicles, and the method comprises:
generating a vehicle message; and
transmitting the vehicle message to a user plane function in a core network via a communication network for being further transmitted to an edge computing device,
wherein the edge computing device is configured to schedule a plurality of vehicle messages comprising the vehicle message and forward the scheduled vehicle message to another in-vehicle telematics terminal via the user plane function, and the another in-vehicle telematics terminal is mounted on another vehicle in the platoon.

9. The method according to claim 8, wherein generating the vehicle message comprises:
determining a priority of the vehicle message and generating the vehicle message comprising an identifier indicating the priority; or
generating the vehicle message comprising a parameter, wherein the parameter serves as a basis for determining the priority.

10. The method according to claim 9, wherein:
the parameter comprises a first indicator indicating the vehicle and a second indicator indicating a type of an event;
the priority of the vehicle message is at a first level, when the first indicator indicates that the vehicle is a lead vehicle of the platoon and the second indicator indicates the event is of a first type;
the priority of the vehicle message is at a second level, when the first indicator indicates that the vehicle is a lead vehicle of the platoon and the second indicator indicates the event is of a second type;
the priority of the vehicle message is at a third level, when the first indicator indicates that the vehicle is not the lead vehicle in the platoon; and
the priority at the first level is higher than the priority at the second level, and the priority at the second level is higher than the priority at the third level.

11. The method according to claim 10, wherein when the first indicator indicates that the vehicle is not the lead vehicle in the platoon,
a position of the source vehicle in the platoon is determined, a sub-level of the third level for the vehicle message is determined using the position of the source vehicle, wherein the priority indicated by the sub-level is heightened as a distance between the position of the source vehicle and a position of the lead vehicle in the platoon decreases.

12. The method according to claim 8, further comprising:
generating a registration message comprising: a third identifier, which indicates the platoon, and an address of the in-vehicle telematics terminal of the vehicle message; and
transmitting the registration message to the core network via the communication network for being further transmitted to the edge computing device,
wherein the edge computing device is configured for:
mapping, in a local storage of the edge computing device, the address of the in-vehicle telematics terminal to the third identifier, and
determining an address of the another in-vehicle telematics terminal according to the address of the in-vehicle telematics terminal and all addresses mapped to the third identifier.

13. A method for transmitting messages, executable by a user plane function, wherein the method comprises:
receiving, via a communication network, vehicle messages from a group of in-vehicle telematics terminals, wherein each in-vehicle telematics terminal in the group is mounted on a respective vehicle in a first platoon;
forwarding the vehicle messages to an edge computing device for being scheduled, ;
receiving the scheduled vehicle messages from the edge computing device; and
forwarding, via the communication network, the scheduled vehicle messages to the group of in-vehicle telematics terminals;
wherein a source terminal is one of the in-vehicle telematics terminals which transmits said vehicle message to the user plane function, a destination terminal is another one of the in-vehicle telematics terminals which receives said vehicle message from the user plane function.

14. The method according to claim 13, wherein forwarding the vehicle messages to an edge computing device comprises:
when the user plane function does not support a function of scheduling the vehicle messages, forwarding the vehicle message to the edge computing device; and
the method further comprises:
when the user plane function supports the function of scheduling the vehicle message, scheduling the received vehicle messages.

15. The method according to claim 14, further comprising:
storing one or more scheduling policies received from the edge computing device, wherein each scheduling policy indicates a manner of scheduling vehicle messages transmitted from in-vehicle telematics terminals of a respective platoon; and
determining that the user plane function supports the function of scheduling the vehicle message, when the message scheduling policy of the first platoon is stored by the user plane function; or
determining that the user plane function does not support a function of scheduling the vehicle messages, when the message scheduling policy of the first platoon is not stored by the user plane function.

16. An apparatus for transmitting messages, comprising:
a receiving module, configured for receiving vehicle messages from a user plane function in a core network, wherein the vehicle messages are transmitted from a group of in-vehicle telematics terminals via a communication network to the user plane function, and each in-vehicle telematics terminal in the group is mounted on a respective vehicle in a platoon;
a scheduling module, configured for scheduling the received vehicle messages; and
a transmitting module, configured for transmitting the scheduled vehicle messages to the user plane function for being forwarded via the communication network to to the group of in-vehicle telematics terminals;
wherein for each vehicle message, a source terminal is one of the in-vehicle telematics terminals which transmits said vehicle message to the user plane function, a destination terminal is another one of the in-vehicle telematics terminals which receives said vehicle message from the user plane function.

17. An apparatus for transmitting a message, wherein the apparatus is in an in-vehicle telematics terminal mounted on a vehicle in a platoon, and the apparatus comprises:
a generating module, configured for generating a vehicle message; and
a transmitting module, configured for transmitting the vehicle message to a user plane function in a core network via a communication network for being further transmitted to an edge computing device to an edge computing device,
wherein the edge computing device is configured to schedule a plurality of vehicle messages comprising the vehicle message and forward the scheduled vehicle message to another in-vehicle telematics terminal via the user plane function, and the another in-vehicle telematics terminal is mounted on another vehicle in the platoon.

18. A apparatus for transmitting messages, comprising:
a receiving module, configured for receiving, via a communication network, vehicle messages from a group of in-vehicle telematics terminals, wherein each in-vehicle telematics terminal in the group is mounted on a respective vehicle in a first platoon; and
a forwarding module, configured for forwarding the vehicle messages to an edge computing device for being scheduled, or scheduling the received vehicle messages;
wherein the receiving module is further configured for receiving the scheduled vehicle message from the edge computing device;
wherein the forwarding module is further configured for forwarding, via the communication network, the scheduled vehicle messages to the group of in-vehicle telematics terminals; and
wherein for each vehicle message, a source terminal is one of the in-vehicle telematics terminals which transmits said vehicle message to the user plane function, a destination terminal is another one of the in-vehicle telematics terminals which receives said vehicle message from the user plane function.

19. A computer device, comprising a processor, a memory, and a transceiver, wherein the memory stores a computer program, and the computer program when loaded and executed by the processor implements the method according to any one of claims 1 to 15.

20. A storage medium, storing a computer program, wherein the computer program is configured for implementing the method according to any one of claims 1 to 15.

21. A computer program product, comprising a computer program, wherein the computer program product when executed on a computer causes the computer to perform the method according to any one of claims 1 to 15.
